# EUROPÄISCHE PATENTSCHRIFT

(11) **EP 2 301 708 B1**
(45) Veröffentlichungstag und Bekanntmachung des Hinweises auf die Patenterteilung: **14.08.2019**
(21) Anmeldenummer: 10173786.4
(22) Anmeldetag: 24.08.2010
(51) Int. Cl.: B23P 15/10, F02F 3/00, F02F 3/26, F02F 3/22

(54) **Verfahren zur Herstellung eines Dach-Profils eines Brennkraftmaschinen-Kolbens**
Method for producing a roof profile of a combustion engine piston
Procédé de fabrication d'un profil de toit d'un piston de moteur à combustion interne

(30) Priorität: 23.09.2009 DE 102009042655
(43) Veröffentlichungstag der Anmeldung: 30.03.2011
(73) Patentinhaber: Bayerische Motoren Werke Aktiengesellschaft, 80809 München (DE)
(72) Erfinder: Zapp, Bertram, 85560, Ebersberg (DE); Maier, Manfred, 85570, Markt Schwaben (DE); Hoehl, Johannes, 82216, Maisach (DE); Steinle, Thomas, 86420, Diedorf (DE)

(56) Entgegenhaltungen:
- DE-C1- 10 013 395
- JP-A- 10 277 724
- US-A- 4 847 964
- US-A1- 2005 092 739
- US-A1- 2008 127 818

## Beschreibung

Die Erfindung betrifft ein Verfahren zur Herstellung eines Dach-Profils eines Brennkraftmaschinen-Kolbens, umfassend mehrere Bearbeitungsschritte mit jeweils gesonderter Bearbeitungs-Aufspannung und/oder gesondertem Bearbeitungs-Werkzeug.

Als "kritisches Teil-Profil" wird dabei vorliegend ein Teil-Profil des Kolben-Dachs bezeichnet, das bestimmend und maßgeblich für die bei der Kolben-Bearbeitung vorzuhaltenden Toleranzen insbesondere im Hinblick auf einen Einbau des Kolbens in der Brennkraftmaschine ist.

Die Herstellung des Dach-Profils eines Brennkraftmaschinen-Kolbens erfolgt üblicherweise in mehreren Bearbeitungsschritten, die nicht alle in der selben Bearbeitungs-Aufspannung und/oder mit dem selben Bearbeitungs-Werkzeug durchgeführt werden können. Jeder Wechsel der Bearbeitungs-Aufspannung und/oder des Bearbeitungs-Werkzeugs bedingt Toleranzfehler am Dach-Profil.

Bei einem nachfolgenden Einbau des Kolbens in die Brennkraftmaschine wird eine Teilfläche des Dach-Profils als Messfläche genutzt, um eine toleranzmäßige Abstimmung mit anderen Brennkraftmaschinen-Bauteilen zu ermöglichen.

Insbesondere bei besonders leistungsfähigen Brennkraftmaschinen ist es nachteilig, wenn diese Messfläche mit Toleranzfehlern behaftet ist, da diese gegebenenfalls aus Toleranzfehlern mehrerer Bearbeitungs-Schritte aufsummierten Toleranzfehler aus Sicherheitsgründen vorgehalten werden müssen und einer hochgenauen Ausführung der Brennkraftmaschine entgegenstehen.

Die US 4 847 964 A betrifft ein Verfahren zum Herstellen einer gelenkigen Kolbenkrone. Die Kolbenkrone ist als Schmiedeteil aus einer Stahllegierung hergestellt. Das beschriebene Verfahren umfasst die Schritte Vorbearbeiten einer Verbrennungsmulde, einer Oberseite, einer Mehrzahl von Ringnuten und einer Unterseite, Einspannen eines Bauteils in eine Bolzenbohrung, Anlegen der Kolbenkronenunterseite an einen Anschlag und einer Seite eines Kühlkanals an eine Zentrierung, und Fertigbearbeiten der Verbrennungsmulde, der Oberseite und der Mehrzahl von Ringnuten.

Aus der US 2005/092739 A1 ist ein Kolben bekannt, der aus gesonderten Teilen mit sich umlaufend erstreckenden Fügeflächen hergestellt ist. Die Fügeflächen werden vor dem Fügen auf eine erhöhte Temperatur aufgeheizt, um ein Fügen der Fügeflächen zu ermöglichen. Nachfolgend werden die Fügeflächen miteinander in Kontakt gebracht und gegeneinander verdreht, um eine dauerhafte metallische Verschweißung an der Schnittstelle zwischen den Fügeflächen zu erreichen. Der Kolben hat radial beabstandete Wände, die gleichzeitig verschweißt werden. Die Schweißverbindung liegt in derselben Ebene oder in unterschiedlichen Ebenen. Es wird vorgeschlagen, die Teile, sobald sie miteinander verbunden sind und während sie noch heiß sind, geringfügig auseinander zu ziehen, um eine Wandstärke an der Schweißverbindung zu reduzieren.

Der Erfindung liegt daher die Aufgabe zugrunde, ein eingangs genanntes Verfahren und einen eingangs genannten Kolben bereit zu stellen, bei dem der erforderliche Toleranz-Vorhalt reduziert werden kann, sodass eine geometrisch genauere Ausführung der Brennkraftmaschine erfolgen und die Prozesssicherheit bei der Fertigung erhöht werden kann.

Die Lösung der Aufgabe erfolgt mit einem Herstellungs-Verfahren mit den Merkmalen des Anspruchs 1, indem ein erster Bearbeitungsschritt in einer ersten Bearbeitungs-Aufspannung durchgeführt wird und ein zweiter Bearbeitungsschritt in einer zweiten Bearbeitungs-Aufspannung durchgeführt wird, wobei während des zweiten Bearbeitungsschrittes Ventiltaschen als kritisches Teil-Profil erzeugt werden und außerdem im Dach-Profil des Kolbens im Bereich über einer Kolbenbolzen-Achse eine Messfläche zur toleranzmäßigen Abstimmung mit anderen Brennkraftmaschinen-Bauteilen erzeugt wird.

Damit wird ein Wechsel der Bearbeitungs-Aufspannung und/oder des Bearbeitungs-Werkzeug zwischen Herstellung des kritischen Teil-Profils und Herstellung der Messfläche vermieden, sodass das kritische Teil-Profil und die Messfläche zueinander eine größtmögliche Form- und Lagegenauigkeit aufweisen. In der Folge kann die Brennkraftmaschine wesentlich maßgenauer hergestellt werden, da der Toleranz-Vorhalt reduziert werden kann. In der Serienfertigung werden gleiche Brennraumvolumina sowohl innerhalb einer Brennkraftmaschine als auch über die Serie erreicht. Die Brennkraftmaschinen weisen eine gleiche Leistung, einen gleichen Kraftstoffverbrauch und gleiche Abgaswerte auf. Außerdem wird der Montageprozess vereinfacht und die Prozesssicherheit bei der Fertigung deutlich erhöht.

Indem sowohl das kritische Teil-Profil als auch die Messfläche während des zweiten Bearbeitungsschritts erzeugt werden, ist die Messfläche
in Bezug auf das kritische Teil-Profil frei von Toleranz-Fehlern, auch wenn zwischen erstem und zweitem Bearbeitungsschritt Toleranz-Fehler auftreten.

In Einbaulage ist der Abstand zwischen den vom Dach-Profil des Kolbens umfassten Ventiltaschen und den Ventilen kritisch. Dies gilt insbesondere für Brennkraftmaschinen mit hoher Leistung. Erfindungsgemäß wird damit erreicht, dass die Messfläche in Bezug auf die Ventiltaschen frei von Toleranz-Fehlern ist.

Dadurch, dass die Messfläche im Dach-Profil des Kolbens im Bereich über der Kolbenbolzen-Achse angeordnet ist, kann ein Messen das Dach-Profils des Kolbens an der Messfläche ohne Einfluss des Kolben-Kippspiels erfolgen.

Nachfolgend ist ein besonders zu bevorzugendes Ausführungsbeispiel der Erfindung unter Bezugnahme auf Figuren näher erläutert, dabei zeigen schematisch und beispielhaft
- Figur 1a: einen Brennkraftmaschinen-Kolben im Schnitt entlang der Linie I-I in Figur 1b,
- Figur 1b: einen Brennkraftmaschinen-Kolben in Draufsicht,
- Figur 1c: einen Brennkraftmaschinen-Kolben im Schnitt entlang der Linie A-A in Figur 1b und
- Figur 2: einen Brennkraftmaschinen-Kolben im Schnitt in einem Bearbeitungsstadium zwischen mehreren Bearbeitungsschritten.

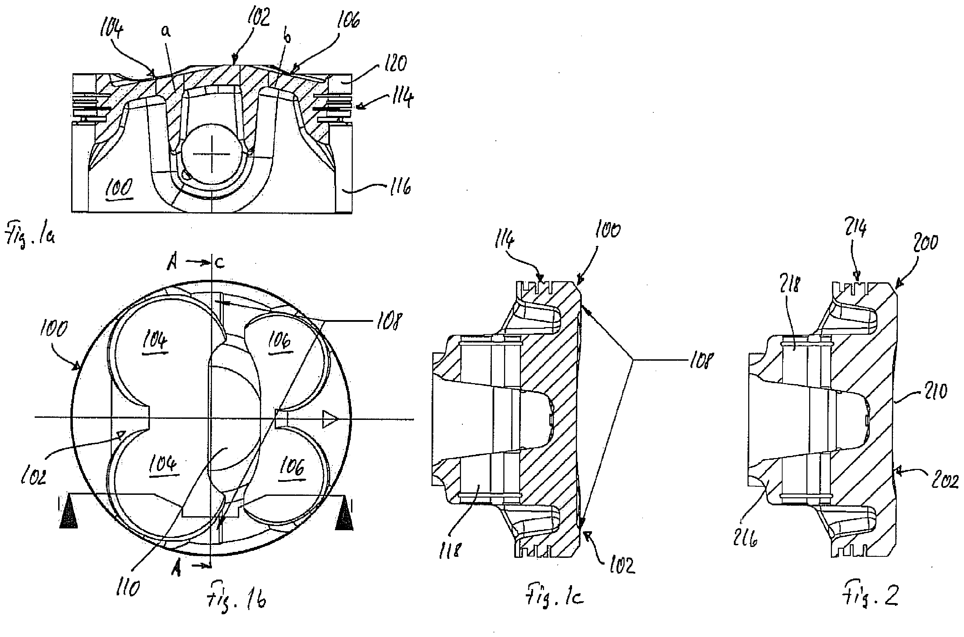

Figur 1a zeigt einen Brennkraftmaschinen-Koiben 100 im Schnitt entlang der Linie I-I in Figur 1b, die ihrerseits den Kolben 100 in Draufsicht zeigt. In Figur 1c ist der Brennkraftmaschinen-Kolben 100 im Schnitt entlang der Linie A-A in Figur 1b dargestellt.

Der Brennkraftmaschinen-Kolben 100 ist zum Einbau in einer Brennkraftmaschine, insbesondere in einer Vierzylinder-Reihen-Brennkraftmaschine eines Kraftrads bestimmt. Der Brennkraftmaschinen-Kolben 100 kann jedoch auch in einer anderen Brennkraftmaschine eines Kraftrads, beispielsweise in einer Zweizylinder-Brennkraftmaschine insbesondere in Boxer- oder Paralleltwin-Bauweise oder in einer Einzylinder Brennkraftmaschine verwendet werden. Der Brennkraftmaschinen-Kolben 100 kann ferner auch in eine Brennkraftmaschine eingebaut werden, die zum Antrieb eines mehrspurigen Fahrzeugs, wie Trike, Quad, oder PKW dient.

Der Kolben 100 umfasst einen Kolbenschaft 116 zur Führung des Kolbens 100 im Zylinder, ein Bolzenauge 118 zur Aufnahme eines Kolbenbolzens zur Verbindung des Kolbens 100 mit einem Pleuel, eine Ringpartie 114 zur Aufnahme von Kolbenringen, einen Feuersteg 120 zum Schutz gegen unmittelbare Einwirkung der Verbrennungsgase auf die Ringpartie 114 sowie ein Kolben-Dach 102, das in der Brennkraftmaschine den Brennraum mit begrenzt.

Das Kolben-Dach 102 des Kolbens 100 ist brennraumseitig profiliert. Das Profil des Kolben-Dachs 102 umfasst ein muldenförmiges Teil-Profil 110, Ventiltaschen 104, die den Einlassventilen zugeordnet sind, Ventiltaschen 106, die den Auslassventilen zugeordnet sind sowie Messflächen 108.

Zunächst wird in einem Bearbeitungsschritt der Kolben 100 aufgespannt und es wird mittels eines Werkzeugs spanend das muldenförmige Teil-Profil 110 als Drehkontur hergestellt. In Figur 2 ist der Kolben 200 nach diesem Bearbeitungsschritt gezeigt wobei mit 202 das Kolben-Dach, mit 210 das muldenförmige Teil-Profil, mit 214 die Ringpartie, mit 216 der Kolbenschaft und mit 218 das Bolzenauge bezeichnet ist.

Nachfolgend wird das weitere Profil des Kolben-Dachs in einer anderen Aufspannung und/oder mittels eines anderen Werkzeugs hergestellt. In diesem weiteren Bearbeitungsschritt werden insbesondere die Ventiltaschen 104, 106 hergestellt. Erfindungsgemäß werden in diesem Bearbeitungsschritt außerdem die Messflächen 108 erzeugt. Damit Ventiltaschen 104, 106 und Messflächen 108 unter Vermeidung von Toleranzfehlern zueinander besonders exakt ausgerichtet.

Bei dem späteren Einbau des Kolbens 100 dienen die Messflächen 108 zur Einstellung des Abstands zwischen den Ventiltaschen 104, 106 und den Ventiltellern sowie dem zylinderkopfseitigen Brennraum-Dach im oberen Totpunkt. Dieser Abstand hat Einfluss auf Leistung, Abgaswerte und Kraftstoffverbrauch der Brennkraftmaschine und ist besonders genau einzustellen. Bei Brennkraftmaschinen mit großer volumenbezogener Leistung ist der Abstand zwischen den Ventiltaschen 104, 106 und den Ventiltellern im oberen Totpunkt zudem sehr gering und deshalb im Hinblick auf mögliche Schäden beim Betrieb der Brennkraftmaschine besonders kritisch. Der vorliegend beschriebene Kolben ist daher besonders für Brennkraftmaschinen mit großer volumenbezogener Leistung geeignet, insbesondere für Brennkraftmaschinen mit Leistungen über 100 kW/l Hubraum. Außerdem führt ein besonders exakt gefertigtes Kolben-Dach-Profil zu einer hohen Prozesssicherheit und minimiert bei Mehrzylinder-Brennkraftmaschinen Abweichungen der Zylinder untereinander sowie bei einer Serienfertigung Abweichungen über die Serie.

## Patentansprüche

1. Verfahren zur Herstellung eines Dach-Profils (110, 104, 106, 108, 210) eines Brennkraftmaschinen-Kolbens (100, 200), umfassend mehrere Bearbeitungsschritte mit jeweils gesonderter Bearbeitungs-Aufspannung und/oder gesondertem Bearbeitungs-Werkzeug, **dadurch gekennzeichnet, dass** ein erster Bearbeitungsschritt in einer ersten Bearbeitungs-Aufspannung durchgeführt wird und ein zweiter Bearbeitungsschritt in einer zweiten Bearbeitungs-Aufspannung durchgeführt wird, wobei während des zweiten Bearbeitungsschrittes Ventiltaschen als kritisches Teil-Profil (104, 106) erzeugt werden und außerdem im Dach-Profil des Kolbens im Bereich über einer Kolbenbolzen-Achse (c) eine Messfläche (108) zur toleranzmäßigen Abstimmung mit anderen Brennkraftmaschinen-Bauteilen erzeugt wird.

## Claims

1. A method for producing a crown profile (110, 104, 106, 108, 210) of an internal combustion engine piston (100, 200), comprising a plurality of machining steps with a separate machining setup and/or separate machining tool in each case, **characterised in that** a first machining step is carried out in a first machining setup and a second machining step is carried out in a second machining setup, wherein during the second machining step valve reliefs are produced as a critical partial profile (104, 106) and furthermore a measurement face (108) for matching tolerance-wise with other internal combustion engine components is produced in the crown profile of the piston in the region above a gudgeon pin axis (c).

## Revendications

1. Procédé de fabrication d'un profil de toit (110, 104, 106, 108, 210) d'un piston (100, 200) de moteur à combustion interne comprenant plusieurs étapes d'usinage avec chaque fois une fixation d'usinage particulière et/ou un outil d'usinage particulier,
procédé **caractérisé en ce qu'**
on effectue une première fixation d'usinage pour une première étape d'usinage et une seconde fixation d'usinage pour une seconde étape d'usinage, et pendant la seconde étape d'usinage on réalise les poches de soupape comme profils partiels critiques (104, 106) et en outre on réalise dans le profil de toit du piston, dans la région sur l'axe du goujon piston (c), une surface de mesure (108) pour accorder les tolérances avec les autres composants du moteur à combustion interne.
